# EUROPÄISCHE PATENTANMELDUNG

(11) **EP 1 602 849 A1**
(43) Veröffentlichungstag der Anmeldung: **07.12.2005**
(21) Anmeldenummer: 04013097.3
(22) Anmeldetag: 03.06.2004
(51) Int. Cl.: F16D 48/04

(54) **Hydraulische Schaltungsanordnung und Verfahren zur Ansteuerung einer nasslaufenden Doppelkupplung**

(71) Anmelder: BorgWarner Inc., Auburn Hills MI 48326 (US)
(72) Erfinder: Ebinger, Günter, Dr., 76684 Östringen (DE); Burmeister, Matthias, 69121 Heidelberg (DE)
(74) Vertreter: Patentanwälte Westphal, Mussgnug & Partner

(57) **Zusammenfassung**

Die Erfindung betrifft eine hydraulische Schaltungsanordnung sowie ein Verfahren zur Ansteuerung einer nasslaufenden Doppelkupplung mit einem ersten hydraulisch ansteuerbaren Aktuator (1) für die erste Kupplung der Doppelkupplung, mit einem zweiten hydraulisch ansteuerbaren Aktuator (2) für die zweite Kupplung der Doppelkupplung, mit einer Einrichtung (20) zur Versorgung der Doppelkupplung mit Hydraulikflüssigkeit zur Kühlung der Doppelkupplung und mit einer Hydropumpe (6), welche eine Systemdruckleitung (5), aus der der erste Aktuator (1) und der zweite Aktuator (2) gespeist werden, speist. Erfindungsgemäß ist vorgesehen, dass die Hydropumpe (6) von einem Elektromotor (7) angetrieben wird und dass mittels der Hydropumpe (6) ein mit der Systemdruckleitung (5) verbundener hydraulischer Speicher (11) geladen wird.

## Beschreibung

Die Erfindung betrifft eine hydraulische Schaltungsanordnung zur Ansteuerung einer nasslaufenden Doppelkupplung nach dem Oberbegriff des Patentanspruchs 1 sowie ein Verfahren zur Ansteuerung einer nasslaufenden Doppelkupplung nach dem Oberbegriff des Patentanspruchs 21.

Doppelkupplungen der gattungsgemäßen Art sind dazu vorgesehen, bei Automatikgetrieben eine zugkraftununterbrochene Schaltung der Gänge zu gewährleisten. Schaltungsanordnungen und Verfahren zur Ansteuerung einer derartigen nasslaufenden Doppelkupplung mit einem ersten hydraulisch ansteuerbaren Aktuator für die erste Kupplung der Doppelkupplung, einem zweiten hydraulisch ansteuerbaren Aktuator für die zweite Kupplung der Doppelkupplung und einer Einrichtung zur Versorgung der Doppelkupplung mit Hydraulikflüssigkeit zur Kühlung der nasslaufenden Doppelkupplung sind aus dem Stand der Technik in einer Vielzahl von Abwandlungen bekannt. Die Kupplungsaktuatorik wird ebenso wie die Kupplungskühlung regelmäßig aus einer sogenannten Haupt- oder Systemdruckleitung mit Hydraulikflüssigkeit gespeist, in welcher sich die Hydraulikflüssigkeit unter einem Haupt- oder Systemdruck befindet. Dieses Druckniveau wird dadurch eingestellt, dass eine von einem Verbrennungsmotor angetriebene Hydropumpe aus einem Hydraulikflüssigkeitsbehälter (z.B. einer Ölwanne) Hydraulikflüssigkeit (Öl) in die Haupt- oder Systemdruckleitung pumpt und ein Haupt- oder Systemdruckregelventil überschüssige Hydraulikflüssigkeit (Öl) abregelt. Die DE 198 58 543 A1 zeigt beispielhaft eine derartige Anordnung und das zugehörige Regelverfahren. Diese Anordnung bzw. dieses Verfahren hat sich dem Grunde nach bewährt, weil dadurch trotz des vergleichsweise hohen (s. Veröffentlichung: Ebinger Toptec 2000, Ypsilanti "A Trade Study for Determining Pump Design Direction) Hydraulikflüssigkeitsbedarfs für die Ansteuerung der Kupplungsaktuatorik und die Kühlung der Kupplungen stets eine ausreichende Versorgung mit Hydraulikflüssigkeit gewährleistet ist.

Weiterhin sind seit nunmehr über zehn Jahren hiervon abweichende Schaltungsanordnungen bzw. Verfahren zur hydraulischen Ansteuerung von Trockenkupplungen in automatisierten Handschaltgetrieben bekannt, wie sie beispielsweise auch bei der Modellreihe M3 von BMW eingesetzt werden. Hier wird die Kupplungsaktuatorik ebenso wie bei der o.a. Doppelkupplung regelmäßig aus einer sogenannten Haupt- oder Systemdruckleitung mit Hydraulikflüssigkeit gespeist, in welcher sich die Hydraulikflüssigkeit unter einem Haupt- oder Systemdruck befindet. Dieses Druckniveau wird hier jedoch dadurch eingestellt, dass eine von einem Elektromotor angetriebene Hydropumpe aus einem Hydraulikflüssigkeitsbehälter Hydraulikflüssigkeit in einen hydraulischen Akkumulator pumpt. Die Kupplungsaktuatorik wird ausgehend von diesem aufgeladenen Akkumulator über die Haupt- bzw. Systemdruckleitung angesteuert.

Eine derartige Anordnung ist vergleichsweise wirkungsgradgünstig. Voraussetzung ist jedoch ein sehr geringer Hydraulikflüssigkeitsbedarf, da die Förderleistung einer elektromotorisch angesteuerten Hydropumpe und die Speicherkapazität eines hydraulischen Akkumulators nur sehr begrenzt sind. Trockenkupplungen zeichnen sich eben durch ein sehr geringen Hydraulikflüssigkeitsbedarf aus, da keine Hydraulikflüssigkeit zur Kühlung der Kupplung erforderlich ist und da geringe Leckageverluste bei der Kupplungsaktuatorik auftreten.

Die Aufgabe der Erfindung besteht nunmehr darin, eine hydraulische Schaltungsanordnung bzw. ein Verfahren zur Ansteuerung einer nasslaufenden Doppelkupplung eines automatischen Doppelkupplungsgetriebes der gattungsgemäßen Art sehr einfach, robust, leistungsarm und unabhängig vom Motorantrieb zu gestalten. Darüber hinaus sollen bei hoher Betriebssicherheit Herstellungs- als auch Betriebskosten so gering wie möglich gehalten werden.

Diese Aufgabe wird bei einer Anordnung der gattungsgemäßen Art durch die Merkmale des kennzeichnenden Teils des Patentanspruchs 1 sowie bei einem Verfahren der gattungsgemäßen Art durch die Merkmale des kennzeichnenden Teils des Patentanspruchs 21 gelöst.

Vorteilhafte Ausführungen und Weiterbildungen der Erfindung sind in den Unteransprüchen angegeben.

Die Erfindung basiert auf der Idee, das vergleichsweise teure und niedereffiziente gattungsgemäße hydraulische System dadurch zu verbessern, dass sämtliche Leistung aufnehmende bzw. Energie verbrauchende Komponenten des Ansteuersystems entweder vollständig eliminiert oder durch verlustarme Komponenten ersetzt werden.

Bei einem leckageverlustreduzierten und kühlmittelbedarfsreduzierten System ist ein Systemdruckregelsystem ausreichend, bei dem erfindungsgemäß nunmehr vorgesehen ist, dass die Hydropumpe von einem Elektromotor angetrieben ist und das einen mit der Systemdruckleitung verbundenen hydraulischen Speicher aufweist, welcher mittels der Hydropumpe geladen wird und welcher Hydraulikflüssigkeit über die Systemdruckleitung zur Verfügung stellt, um die Aktuatoren der Doppelkupplung anzusteuern. Durch Leckageverlustoptimierung oder -reduzierung war es also möglich das Hydrauliksystem mit einem relativ kleinen Druckspeicher und geringer Pumpenkapazität zu gestalten.

In besonders vorteilhafter Ausgestaltung der Erfindung ist eine Hydropumpensteuereinrichtung vorgesehen, welche die Hydropumpe abschaltet, wenn ein von einer Systemdruckmesseinrichtung in der Systemdruckleitung gemessener hydraulischer Systemdruck einen vorbestimmten hydraulischen Systemdruck übersteigt und welche die Hydropumpe einschaltet, wenn der von der Systemdruckmesseinrichtung in der Systemdruckleitung gemessene hydraulische Systemdruck einen vorbestimmten hydraulischen Systemdruck unterschreitet. Durch diese Maßnahme wird vermieden, dass die Hydropumpe dauernd läuft, was einerseits zur Erzielung eines hohen Wirkungsgrads wünschenswert ist und andererseits die Betriebsdauer von Hydropumpe und Elektromotor deutlich erhöht.

Um dieses Betriebsverhalten zu gewährleisten, ist erfindungsgemäß vorgesehen, dass die Systemdruckmesseinrichtung derart ausgebildet ist, dass wenigstens zwei Druckniveaus bestimmbar sind. Eine derartig gestaltete Systemdruckmesseinrichtung lässt sich in unterschiedlichster Art und Weise realisieren. Sehr einfach kann dies mittels eines Drucksensors bewerkstelligt werden, welcher eine kontinuierliche oder diskrete Erfassungscharakteristik aufweist. Es ist jedoch auch denkbar zwei Druckniveau-Schalter vorzusehen, welche bei Erreichen eines jeweiligen bestimmten Druckniveaus schalten. Insbesondere bei letztgenannter Variante kann auf eine elektronische Auswerteschaltung verzichtet werden.

Wie vorstehend bereits dargelegt wurde, ist es erforderlich, die Leckageverluste niedrig zu halten, um überhaupt eine elektromotorisch angetriebene Pumpe verwenden zu können, da diese üblicherweise eine geringere Förderleistung aufweist, als eine mit einem Verbrennungsmotor angetriebene Hydropumpe. Darüber hinaus ist es wünschenswert sämtliche Leckageverluste gering zu halten, um die Betriebsdauer von Hydropumpe und Elektromotor so gering wie möglich zu halten. Aus diesem Grund sieht die Erfindung in einer besonders bevorzugten Variante Mittel vor, mit Hilfe der der Speicher von der Systemdruckleitung getrennt werden kann, wenn keine Entnahme von Hydraulikflüssigkeit aus der Systemdruckleitung erfolgt. Dies kann insbesondere dann der Fall sein, wenn keiner der beiden Aktuatoren hydraulisch angesteuert wird.

Zu diesem Zweck kann die hydraulische Schaltungsanordnung beispielsweise ein einen hohen Durchfluss ermöglichendes Ein-/Aus-Ventil umfassen, welches den Speicher von der Systemdruckleitung bei Bedarf trennt. Auf diese Weise kann Energie eingespart werden, da kein Systemdruck erforderlich ist, wenn keine der Kupplungen betätigt wird.

Aus betriebstechnischen Gründen als auch aus Gründen der weitestmöglichen Reduzierung von Leckageverlusten ist Vorteilhafterweise erfindungsgemäß zwischen der Hydropumpe und der Systemdruckleitung ein Rückschlagventil vorgesehen, welches ein Rückfließen von Hydraulikflüssigkeit über die Hydropumpe verhindert.

Aus Sicherheitsgründen kann ein mit der Systemdruckleitung verbundenes federbelastetes Rückschlagventil vorgesehen sein, welches bei Überschreiten eines vorbestimmten Systemdrucks ein Abfließen von Hydraulikflüssigkeit ermöglicht, so dass das Auftreten eines Überdrucks verhindert wird. Die überschüssige Hydraulikflüssigkeit kann einerseits wieder einem Hydraulikflüssigkeitsbehälter zugeführt werden, aus dem die Systemdruckleitung mittels der Hydropumpe gespeist wird, es ist jedoch auch möglich diese der Einrichtung zur Kühlung der Doppelkupplung zuzuführen.

Es hat sich als besonders vorteilhaft herausgestellt als Speicher einen sogenannten Membranspeicher, einen Metallbalg- oder einen Kolbenspeicher zu verwenden. Ein bevorzugt verwendeter Membranspeicher zeichnet sich durch einen guten Kompromiss aus Funktion, Kosten und Bauraum aus.

Es hat sich als günstig herausgestellt, wenn wenigstens einer der Aktuatoren, vorzugsweise beide Aktuatoren, mittels eines kraftveränderlichen Elektromagnetventils ansteuerbar ist. Ein derartiges Elektromagnetventil liefert einen sehr definierten und dynamisch angepassten zum Treiberstrom proportionalen hydraulischen Aktuatoransteuerdruck. Derartige Ventile mit vergleichsweise geringen Leckageverlusten sind frei im Handel erhältlich.

Bei einem ersten Ausführungsbeispiel der Erfindung ist die Einrichtung zur Versorgung der Doppelkupplung mit Hydraulikflüssigkeit zur Kühlung der Reibelemente mit der Systemdruckleitung verbunden. Eine Versorgung mit Hydraulikflüssigkeit als Kühlmittel erfolgt in diesem Ausführungsbeispiel über die Systemdruckleitung. Bei diesem Ausführungsbeispiel reicht eine einzige Hydropumpe aus, um Hydraulikflüssigkeit für die Kupplungsaktuatorik und zur Kupplungskühlung mit dem notwendigen Druck bereitzustellen.

Bei diesem Ausführungsbeispiel hat es sich als vorteilhaft herausgestellt, wenn ein mit der Systemdruckleitung verbundenes federbelastetes Rückschlagventil vorgesehen ist, welches bei Überschreiten eines vorbestimmten Systemdrucks eine Versorgung der Einrichtung mit Hydraulikflüssigkeit ermöglicht.

Darüber hinaus sind bei diesem Ausführungsbeispiel Vorzugsweise Mittel vorgesehen, mit Hilfe der die (Kühlmittelversorgungs-) Einrichtung von der Systemdruckleitung getrennt und wieder mit dieser verbunden werden kann. Diese Mittel können z.B. ein einen hohen Durchfluss ermöglichendes Ein-/Aus-Ventil umfassen.

In einem zweiten Ausführungsbeispiel ist im Gegensatz zum ersten Ausführungsbeispiel erfindungsgemäß eine weitere von einem weiteren Elektromotor angetriebene Hydropumpe vorgesehen, welche die (Kühlmittelversorgungs-) Einrichtung mit Hydraulikflüssigkeit speist. Kupplungsansteuerung und Kupplungskühlung sind bei dieser Anordnung voneinander getrennt. Diese Variante erlaubt eine niedrige Leistungsaufnahme der Hydraulik bei gleichzeitig (im allgemeinen aufgrund der Kupplungsaktuatorik notwendigen) hohem Druck- und (im allgemeinen aufgrund der Kupplungskühlung notwendigen) hohem Volumenbedarf.

Zur weiteren Minimierung der Leistungsaufnahme ist erfindungsgemäß eine Hydropumpensteuereinrichtung vorgesehen, welche die weitere Hydropumpe periodisch zu- und abschalten kann, um ein vorbestimmtes mittleres Fördervolumen zu erhalten.

Bei einem dritten Ausführungsbeispiel ist erfindungsgemäß eine weitere von dem die erste Hydropumpe antreibenden Elektromotor angetriebene Hydropumpe vorgesehen, welche die Einrichtung mit Hydraulikflüssigkeit speist. Bei diesem Ausführungsbeispiel genügt ein einziger Elektromotor zum Antrieb beider Hydropumpen.

Werden beide Hydropumpen beispielsweise über eine gemeinsame rotierende Welle gleichzeitig von dem Elektromotor angetrieben, so sind aktueller Druck und Förderstrom der zur Kühlung verwendeten Hydraulikflüssigkeit und der zur Kupplungsbetätigung verwendeten Hydraulikflüssigkeit nicht vollständig entkoppelt, was mitunter zu einer erhöhten Leistungsaufnahme und damit zu einem schlechten Wirkungsgrad des Systems führt. Ein schlechter Wirkungsgrad kann je nach Anwendungsfall nicht tolerierbar sein.

Erfindungsgemäß ist daher in einem vierten Ausführungsbeispiel vorgesehen, dass der Elektromotor in beiden Drehrichtungen betrieben werden kann. Weiter sind Mittel vorgesehen, welche dafür sorgen, dass je nach Drehrichtung des Elektromotors entweder die Hydropumpe oder die weitere Hydropumpe angetrieben wird. Im einfachsten Fall sind diese Mittel Freiläufe, welche an einer jeweiligen die Hydropumpen antreibenden rotierenden Welle angeordnet sind.

Auch bei diesem Ausführungsbeispiel kann ein mit der Systemdruckleitung verbundenes federbelastetes Rückschlagventil vorgesehen sein, welches bei Überschreiten eines vorbestimmten Systemdrucks eine Versorgung der Einrichtung mit Hydraulikflüssigkeit aus der Systemdruckleitung ermöglicht.

Die Erfindung wird nunmehr anhand der Zeichnung beschrieben. Es zeigen:

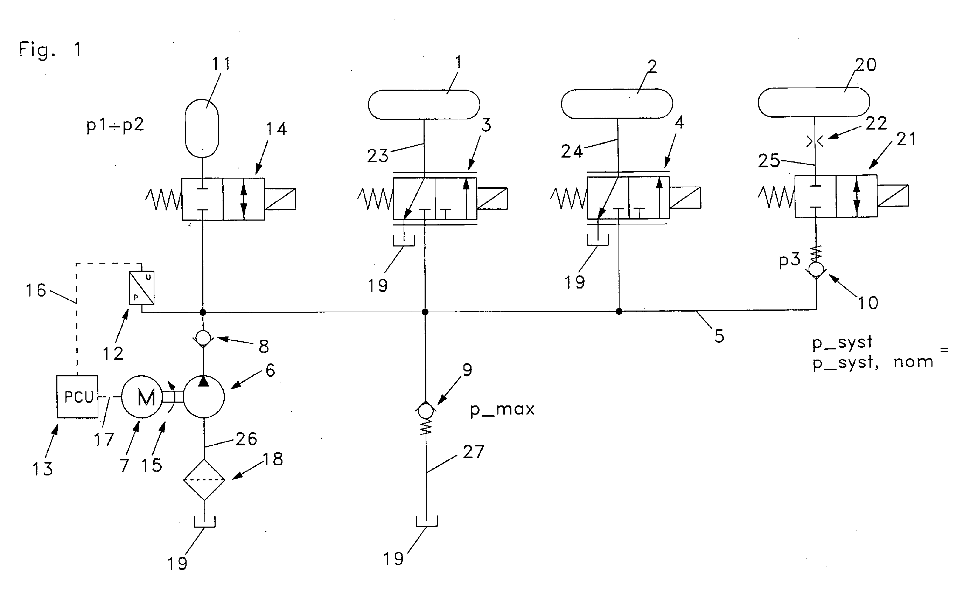

- Figur 1:: Ein erstes Ausführungsbeispiel einer erfindungsgemäßen hydraulischen Schaltungsanordnung zur Ansteuerung einer geschachtelt angeordneten nasslaufenden Doppelkupplung eines automatisierten Doppelkupplungsschaltgetriebes für Hybrid-Antrieb: Die Ventile zur Kupplungsansteuerung und zur Kupplungskühlung werden vom Systemdruck gespeist.

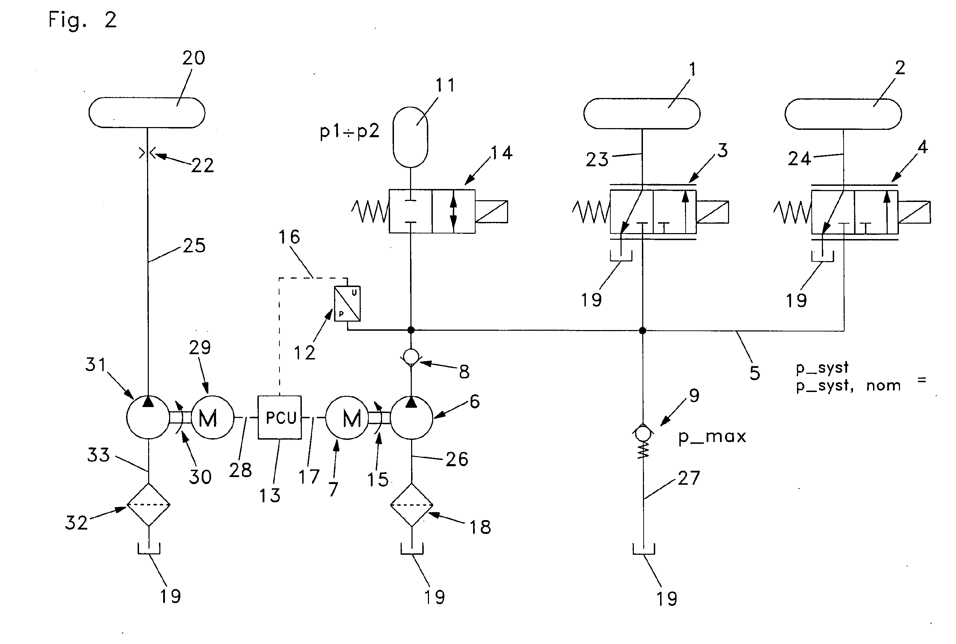

- Figur 2:: Ein zweites Ausführungsbeispiel einer erfindungsgemäßen hydraulischen Schaltungsanordnung zur Ansteuerung einer geschachtelt angeordneten nasslaufenden Doppelkupplung eines automatisierten Doppelkupplungsschaltgetriebes für Hybrid-Antrieb: Die Ventile zur Kupplungsansteuerung werden vom Systemdruck gespeist. Die Kupplungskühlung wird über eine weitere von einem separaten Elektromotor angetriebene Hydropumpe gespeist.

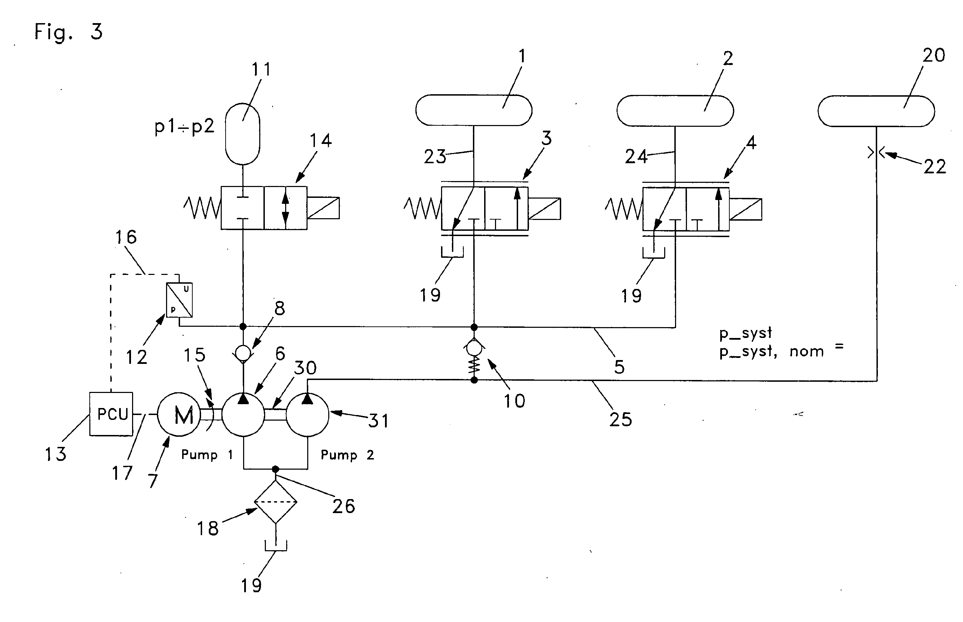

- Figur 3:: Ein drittes Ausführungsbeispiel einer erfindungsgemäßen hydraulischen Schaltungsanordnung zur Ansteuerung einer geschachtelt angeordneten nasslaufenden Doppelkupplung eines automatisierten Doppelkupplungsschaltgetriebes für Hybrid-Antrieb: Die Ventile zur Kupplungsansteuerung werden vom Systemdruck gespeist. Die Kupplungskühlung wird über eine separate Hydropumpe gespeist. Ein Elektromotor treibt sowohl eine Hydropumpe zur Bereitstellung des Systemdrucks als auch die weitere Hydropumpe gemeinsam an.

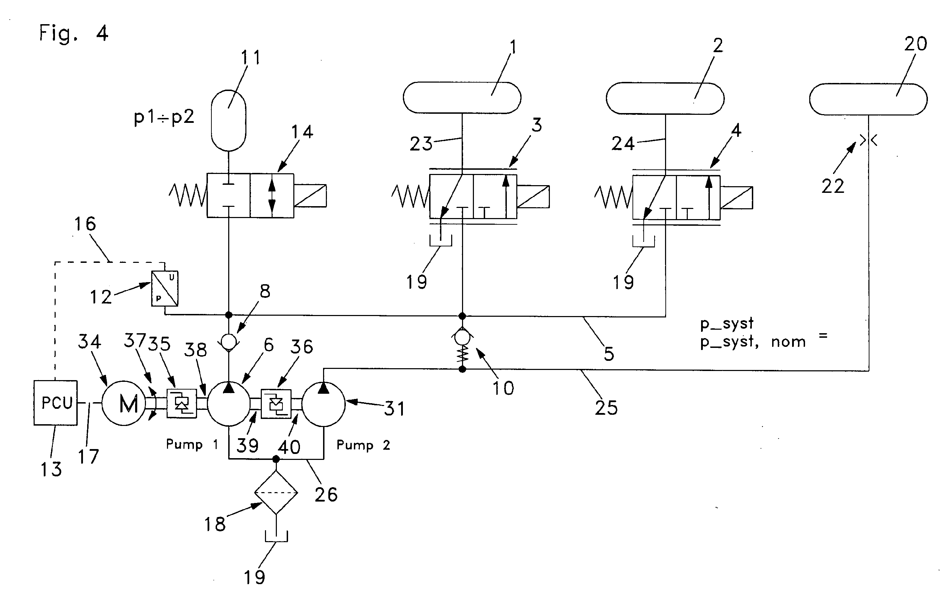

- Figur 4:: Ein viertes Ausführungsbeispiel einer erfindungsgemäßen hydraulischen Schaltungsanordnung zur Ansteuerung einer geschachtelt angeordneten nasslaufenden Doppelkupplung eines automatisierten Doppelkupplungsschaltgetriebes für Hybrid-Antrieb: Die Ventile zur Kupplungsansteuerung werden vom Systemdruck gespeist. Die Kupplungskühlung wird über eine separate Hydropumpe gespeist. Ein Elektromotor treibt sowohl eine Hydropumpe zur Bereitstellung des Systemdrucks als auch die weitere Hydropumpe an. Die beiden Hydropumpen werden in Abhängigkeit von der Motordrehrichtung unabhängig voneinander angetrieben.

Die Figur 1 zeigt eine erstes Ausführungsbeispiel einer erfindungsgemäßen hydraulischen Schaltungsanordnung. Diese hydraulische Schaltungsanordnung dient zur Ansteuerung einer Doppelkupplung mit relativ geringem Kühlölbedarf in einem automatisierten Schaltgetriebe für Hybrid-Antrieb. Funktionen der hydraulischen Schaltungsanordnung sind Hauptdruckregelung, Kupplungsdruckregelung und Steuerung der Kupplungskühlung.

Die Schnittstellen der hydraulischen Schaltungsanordnung zur Doppelkupplung sind in der Fig. 1 mit den Bezugszeichen 1, 2, 20 gekennzeichnet. Insbesondere stellt das mit dem Bezugszeichen 1 gekennzeichnete Symbol den Aktuator der ersten Kupplung und das mit dem Bezugszeichen 2 gekennzeichnete Symbol den Aktuator der zweiten Kupplung dar. Das mit dem Bezugszeichen 20 gekennzeichnete Schaltsymbol kennzeichnet die Kupplungskühlung und -schmierung.

Die beiden Aktuatoren 1, 2 sind über Kupplungsleitungen 23, 24 und elektromagnetisch betätigte 3/2-Wegeventile 3, 4 an eine Systemdruckleitung 5 angeschlossen. Kupplungskühlung und -schmierung 20 ist über eine Kupplungsleitung 25, in der eine viskositätsstabile Drossel 22 angeordnet ist mittels eines elektromagnetisch betätigbaren 2/2-Wegeventils 21 und ein federbelastetes Rückschlagventil 10 an die Systemdruckleitung 5 angeschlossen.

Weiterhin ist die Systemdruckleitung 5 über eine mittels eines federbelasteten Rückschlagventils 9 entkoppelte Überdruckleitung 27 mit einer Wanne/ einem Behälter 19 verbunden.

Ein Hydrospeicher 11 ist über ein elektromagnetisch betätigtes 2/2-Wegeventil 14 an die Systemdruckleitung 5 angeschlossen.

Schließlich besteht eine Verbindung zwischen der Wanne/dem Behälter 19 über einen Ansaugfilter 18, eine Zuleitung 26, eine mittels einer rotierenden Welle 15 von einem Elektromotor 7 antreibbare Hochdruckhydropumpe 6 und ein unbelastetes Rückschlagventil 8 zu der Systemdruckleitung 5.

Es ist ein Drucksensor 12 vorgesehen, welcher an die Systemdruckleitung 5 angeschlossen ist und welcher über eine elektrische Messleitung 16 an einen Pumpenleitrechner 13 angeschlossen ist, der wiederum über eine elektrische Steuerleitung 17 mit dem Elektromotor 7 verbunden ist.

Die Funktionalität der hydraulischen Schaltungsanordnung gemäß der Figur 1 ergibt sich wie folgt:

Die beiden über die hydraulischen Aktuatoren 1, 2 betätigbaren Kupplungen der Doppelkupplung werden hydraulisch über die beiden elektromagnetisch betätigbaren 3/2-Wegeventile 3,4 hydraulisch angesteuert. Bei diesen elektromagnetisch betätigbaren 3/2-Wegeventilen handelt es sich um sogenannte kraftveränderliche Elektromagnetventile. Derartige Elektromagnetventile liefern einen sehr definierten und dynamischen Ansteuerausgangsdruck für die Aktuatoren, welcher proportional zum Treiberstrom ist. Im vorliegenden Anwendungsfall werden zwei von der Firma BorgWarner entwickelte Elektromagnetventile mit sehr geringer Leckrate verwendet, um Hydraulikflüssigkeitsverluste so gering wie möglich zu halten. Die Aktuatoren 1, 2 der im vorliegenden Ausführungsbeispiel eingesetzten Doppelkupplung werden mit einem vorgegebenen Maximaldruck angesteuert.

Ein über die Systemdruckleitung 5 bereitgestellter Systemdruck p_{syst} dient als Versorgungsdruck, welcher eingangsseitig an den beiden Aktuatorventilen 3, 4 ansteht. Die von dem Elektromotor 7 angetriebene Hochdruckhydropumpe 6, stellt einen Hydraulikflüssigkeitsfluss bereit, welcher ausreicht um Leckageverluste des Systems auszugleichen und die für die Betätigung der Kupplungen notwendigen Volumina zu befüllen.

Um einen hohen Wirkungsgrad und eine lange Lebensdauer zu erreichen sollte die Hydropumpe 6 nicht kontinuierlich betrieben werden. Aus diesen Gründen ist der vorstehend erwähnte hydraulische Speicher 11 vorgesehen, welcher über die Hydropumpe 6 geladen werden kann und der bei ausgeschalteter Hydropumpe 6 die erforderliche Hydraulikflüssigkeit bereit stellt.

Es ist offensichtlich, dass die Leckage des hydraulischen Systems ein wesentlicher Gesichtspunkt für den Wirkungsgrad und die Dimensionierung des gesamten Systems darstellt. Ziel muss es sein, die Leckageverluste so gering wie möglich zu halten, um die Betriebszeiten der Hydropumpe 6 so gering wie möglich zu halten.

Eine minimale Förderleistung von 0 l/min tritt unter normalen Betriebsbedingungen im Hybrid-Modus auf, wenn beide Kupplungen drucklos sind und der hydraulische Speicher 11 von der Systemdruckleitung 5 getrennt ist. Bei allen übrigen Betriebsbedingungen können Fördervolumina größer 0 über die jeweiligen Kupplungsleitungen 23, 24 auftreten.

Das in der Zuleitung zur Systemdruckleitung 5 vorgesehene Rückschlagventil 8 verhindert den Rückfluss von Hydraulikflüssigkeit aus der unter Systemdruck p_{syst} stehenden Hydraulikflüssigkeit in der Systemdruckleitung 5 über die Hydropumpe 6. Der Drucksensor 12 (alternativ können auch zwei Druckschalter eingesetzt werden) misst den Systemdruck p_{syst}. Ein entsprechendes elektrisches Signal wird vom Pumpenleitrechner 13 verarbeitet. Die Hydropumpe 6 wird zugeschaltet, wenn der Systemdruck p_{syst} unter einen unteren Grenzwert p₁ fällt. Die Hydropumpe wird abgeschaltet, wenn der maximale Fülldruck des Speichers von p_{spei-cher} = p₂ erreicht ist.

In einem Betriebszustand, bei dem beide Kupplungen nicht betätigt sind, d. h. wenn beide Kupplungen bzw. beide Ventile 3, 4 geschlossen sind, kann der Speicher mit Hilfe des elektromagnetisch betätigten 2/2-Wegeventils 14 von der Systemdruckleitung 5 getrennt werden. Auf diese Weise kann Energie gespart werden, da kein Systemdruck p_{syst} erforderlich ist, wenn keine der Kupplungen betätigt wird. Darüber hinaus treten keine Leckageverluste auf, da weder ein Pumpenbetrieb noch ein Speicherbetrieb erforderlich ist, so dass der Druck p_{syst} in der Systemdruckleitung 5 zu 0 bar gewählt werden kann. Der Speicher 11 bleibt befüllt. Für den Fall, dass schnell ein Systemdruck p_{syst} > 0 bar erforderlich ist, kann dieser einfach durch Öffnen des Ein-/Aus-Ventil 14 aufgebaut werden.

Ein federbelastetes Rückschlagventil 9 ist als zusätzliche Sicherungseinrichtung vorgesehen, um das Auftreten eines Überdrucks zu verhindern. Je nach Auslegung der Einrichtung 20 wird der Überdruck beim überschreiten eines Werts von p₃ über das Rückschlagventil 10 an die Kühlungseinrichtung 20 abgegeben, wenn das Ventil 21 geöffnet ist oder beim Überschreiten eines Werts von p_{syst} über pₘₐₓ über das Rückschlagventil 9 an die Wanne/den Behälter 19.

Die Figur 2 zeigt ein weiteres Ausführungsbeispiel einer erfindungsgemäßen hydraulischen Schaltungsanordnung. In Übereinstimmung mit dem Ausführungsbeispiel gemäß Figur 1 verwendete Bauteile sind mit identischen Bezugszeichen versehen.

Diese hydraulische Schaltung dient zur Ansteuerung einer Doppelkupplung mit relativ hohem Hydraulikflüssigkeits-(Kühlöl)bedarf in einem automatisierten Schaltgetriebe für Hybrid-Antrieb. Funktionen der Hydraulik sind Systemdruck-Regelung, Kupplungsdruck-Regelung und Steuerung der Kupplungskühlung. Ziel der Erfindung ist eine möglichst niedrige Leistungsaufnahme der Hydraulik bei gleichzeitig hohem Druck- und hohem Volumenstrombedarf.

Bei diesem Ausführungsbeispiel ist die Systemdruckerzeugungseinrichtung sowie die Ansteuereinrichtung der Kupplung identisch wie beim Ausführungsbeispiel gemäß der Figur 1 ausgeführt. Lediglich die Kühlung der Kupplung erfolgt über eine separate Schaltungsanordnung.

Diese Schaltungsanordnung zur Kupplungskühlung umfasst einen Ansaugfilter 32, der eingangsseitig über ein Rohrende mit dem Behälter 19 verbunden ist. Ausgangsseitig ist dieses Ansaugfilter über eine Zuleitung 33 mit einer Niederdruckhydropumpe 31 verbunden, deren Ausgang über eine Kupplungsleitung 25 mit viskositätsstabiler Drossel 22 mit der Kupplungskühlung und - schmierung 20 verbunden ist.

Die Niederdruckhydropumpe 31 ist über eine rotierende Welle 30 mit einem Elektromotor 29 verbunden, welcher wie der Elektromotor 7 über eine entsprechende elektrische Steuerleitung 28 mit dem Pumpenleitrechner 13 verbunden ist.

Die Kupplungskühlung 20 wird über die Einschaltzeit der Niederdruck-Elektropumpe 29, 30, 31 gesteuert. Diese Niederdruckpumpe 31 hat ein größeres Fördervolumen als die Systemdruck-Pumpe 6, arbeitet aber auf einem wesentlich niedrigeren Druckniveau. Sie wird ebenfalls durch die elektronische Steuerung 13 betätigt.

Die Förderleistung der Niederdruckhydropumpe 31 kann dadurch eingestellt werden, dass sie für bestimmte Zeitspannen ein- oder ausgeschaltet wird. Auf diese Weise wird eine mittlere Durchflussleistung erreicht. Beispielsweise kann im Pulsbetrieb mit 33% Ein- und 67% Aus -Zeit eine mittlere Förderleistung von 1/3 des maximalen Förderstroms erreicht werden. Es ist keine zusätzliche hydraulische Steuereinrichtung erforderlich, so dass das gesamte System sehr einfach und robust ist.

Die Kupplungskühlung 20 wird neben der Kühlung der Reibelemente auch zur Schmierung von Lagern und anderen Teilen des Doppelkupplungssystems verwendet. Um diese Schmierung zu gewährleisten, muss die Pumpe regelmäßig in Betrieb gesetzt werden, auch wenn keine Kühlung der Kupplung erforderlich ist.

Die zur Kühlung/Schmierung erforderliche Hydropumpe 31 kann bei einem vergleichsweise niedrigen Druckniveau betrieben werden, da sie nur den Hintergrunddruck des nachfolgenden Systems einschließlich Hydraulikflüssigkeitskanäle und Kupplungsnabe überwinden muss.

Das vorliegenden System nach der Figur 2 zeigt zwei Ansaugfilter 18, 32 sowohl für die Hochdruck- als auch für die Niederdruckpumpe 6, 31. Derartige Ansaugfilter 18, 32 werden üblicherweise zur vergleichsweise groben Reinigung von Hydraulikflüssigkeit verwendet, da sie dem Ansaugfluss nur einen geringen Widerstand entgegensetzen.

Für den Fall, dass die Anforderungen an die Reinheit der Hydraulikflüssigkeit höher sind als bei dem hier beschriebenen Standart Automatikgetriebe, können zusätzliche Druckfilter nachgeschaltet sein, um die entsprechenden Elektromagnetventile und dergleichen vor Kontamination zu schützen.

Die Figur 3 zeigt ein drittes Ausführungsbeispiel einer erfindungsgemäßen hydraulischen Schaltungsanordnung. In Übereinstimmung mit den vorstehend beschriebenen Ausführungsbeispielen gemäß den Figuren 1 und 2 verwendete Bauteile sind auch hier mit identischen Bezugszeichen versehen.

Auch diese hydraulische Schaltungsanordnung dient zur Ansteuerung einer Doppelkupplung mit relativ hohem Kühlölbedarf in einem automatisierten Schaltgetriebe für Hybrid-Antrieb. Funktionen dieser Hydraulik sind Systemdruck-Regelung, Kupplungsdruck-Regelung und Steuerung der Kupplungskühlung. Ziel dieser erfindungsgemäßen Anordnung ist eine möglichst niedrige Leistungsaufnahme der Hydraulik bei gleichzeitig hohem Druck- und hohem Volumenstrombedarf.

Die hydraulische Schaltungsanordnung gemäß der Figur 3 ist weitgehend identisch wie die gemäß der Figur 2 ausgebildet. Auch hier erfolgt die Kupplungskühlung im Wesentlichen unabhängig von der Kupplungsansteuerung. Die Schaltungsanordnung gemäß der Figur 3 unterscheidet sich von der gemäß der Figur 2 dadurch, dass Hoch- und Niederdruckpumpe 6, 31 vom selben Elektromotor 7 über eine gemeinsame Welle 15, 30 antreibbar sind.

Darüber hinaus ist -ähnlich wie beim Ausführungsbeispiel gemäß der Figur 1- vorgesehen, dass bei einem Überdruck p_{syst}, über in der Systemdruckleitung 5 eine Hydraulikflüssigkeitsabgabe aus der Systemdruckleitung 5 über ein federbelastetes Rückschlagventil 10 an die Kupplungskühlung und -schmierung 20 erfolgt.

Die Figur 4 zeigt ein viertes Ausführungsbeispiel einer erfindungsgemäßen hydraulischen Schaltungsanordnung. In Übereinstimmung mit dem Ausführungsbeispiel gemäß der Figur 3 verwendete Bauteile sind auch hier mit identischen Bezugszeichen versehen.

Die Schaltungsanordnung gemäß dieser Figur 4 unterscheidet sich von der gemäß der Figur 3 lediglich dadurch, dass in der die beiden Hydropumpen 6, 31 antreibenden gemeinsamen Welle 37, 38, 39, 40 Freiläufe vorgesehen sind. Es ist vorgesehen, dass der Elektromotor 34 in beiden Drehrichtungen betrieben werden kann. Je nach Drehrichtung des Elektromotors 34 wird entweder die Hochdruckhydropumpe 6 oder die Niederdruckhydropumpe 31 angetrieben. Auf diese Weise wird erreicht, dass die Hydraulikflüssigkeitsversorgung der Kupplungsansteuerung von der der Kühlung und Schmierung vollständig unabhängig ist.

### Bezugszeichenliste

- 1: Aktuator der ersten Kupplung
- 2: Aktuator der zweiten Kupplung
- 3: elektromagnetisches betätigbares 3/2-Wegeventil
- 4: elektromagnetisches betätigbares 3/2-Wegeventil
- 5: Systemdruckleitung
- 6: Hochdruckhydropumpe
- 7: Elektromotor
- 8: unbelastetes Rückschlagventil
- 9: federbelastetes Rückschlagventil
- 10: federbelastetes Rückschlagventil
- 11: Hydrospeicher
- 12: Drucksensor
- 13: Pumpenleitrechner
- 14: elektromagnetisches betätigbares 2/2-Wegeventil
- 15: rotierende Welle
- 16: elektr. Messleitung
- 17: elektr. Steuerleitung
- 18: Filter (Ansaugfilter)
- 19: Wanne/Behälter
- 20: Kupplungskühlung und -schmierung
- 21: elektromagnetisch betätigbares 2/2-Wegeventil
- 22: viskositätsstabile Drossel
- 23: erste Kupplungsleitung
- 24: zweite Kupplungsleitung
- 25: dritte Kupplungsleitung
- 26: Zuleitung
- 27: Überdruckleitung
- 28: elektronische Steuerleitung
- 29: Elektromotor
- 30: rotierende Welle
- 31: Niederdruckhydropumpe
- 32: Filter (Ansaugfilter)
- 33: Zuleitung
- 34: Elektromotor mit zwei Drehrichtungen
- 35: Freilauf
- 36: Freilauf
- 37: rotierende Welle
- 38: rotierende Welle
- 39: rotierende Welle
- 40: rotierende Welle

- p_{syst}: Systemdruck
- p₁: unterer Grenzwert des Systemdrucks
- p₂: maximaler Fülldruck des Systemdrucks
- p₃: Überdruckgrenzwert
- pₘₐₓ: Maximalwert des Systemdrucks
- p_{speicher}: Druck im Speicher 11

## Patentansprüche

1. Hydraulische Schaltungsanordnung zur Ansteuerung einer nasslaufenden Doppelkupplung, insbesondere in einem automatischen Doppelkupplungsgetriebe oder einer Hybridantriebanordnung,
- mit einem ersten hydraulisch ansteuerbaren Aktuator (1) für die erste Kupplung der Doppelkupplung,
- mit einem zweiten hydraulisch ansteuerbaren Aktuator (2) für die zweite Kupplung der Doppelkupplung,
- mit einer Einrichtung (20) zur Versorgung der Doppelkupplung mit Hydraulikflüssigkeit zur Kühlung der Doppelkupplung,
- mit einer Hydropumpe (6), welche eine Systemdruckleitung (5), aus der der erste Aktuator (1) und der zweite Aktuator (2) gespeist werden, speist,
**dadurch gekennzeichnet, dass**
- ein Elektromotor (7), welcher die Hydropumpe (6) antreibt, vorgesehen ist, und dass
- ein mit der Systemdruckleitung (5) verbundener hydraulischer Speicher (11) vorgesehen ist, welcher mittels der Hydropumpe (6) geladen wird.

2. Hydraulische Schaltungsanordnung nach Anspruch 1,
**dadurch gekennzeichnet, dass**
eine Hydropumpensteuereinrichtung (13) vorgesehen ist, welche die Hydropumpe (6) abschaltet, wenn ein von einer Systemdruckmesseinrichtung (12) in der Systemdruckleitung (5) gemessener hydraulischer Systemdruck (p_{syst}) einen vorbestimmten hydraulischen Systemdruck (p₂) übersteigt und welche die Hydropumpe (6) einschaltet, wenn der von der Systemdruckmesseinrichtung (12) in der Systemdruckleitung (5) gemessene hydraulische Systemdruck (p_{syst}) einen vorbestimmten hydraulischen Systemdruck (p₁) unterschreitet.

3. Hydraulische Schaltungsanordnung nach Anspruch 2,
**dadurch gekennzeichnet, dass**
die Systemdruckmesseinrichtung (12) derart ausgebildet ist, dass wenigstens zwei Druckniveaus (p₁, p₂) bestimmbar sind.

4. Hydraulische Schaltungsanordnung nach Anspruch 3,
**dadurch gekennzeichnet, dass**
die Systemdruckmesseinrichtung einen Drucksensor (12) oder zwei Druckniveau-Schalter, welche bei Erreichen eines jeweiligen bestimmten Druckniveaus schalten, umfasst.

5. Hydraulische Schaltungsanordnung nach einem der vorangegangenen Ansprüche,
**dadurch gekennzeichnet, dass**
Mittel (14) vorgesehen sind, mit Hilfe der der Speicher (11) von der Systemdruckleitung (5) getrennt wird, wenn keiner der beiden Aktuatoren (1, 2) hydraulisch angesteuert wird.

6. Hydraulische Schaltungsanordnung nach Anspruch 5,
**dadurch gekennzeichnet, dass**
die Mittel ein einen hohen Durchfluss ermöglichendes Ein-/Aus-Ventil (14) umfassen.

7. Hydraulische Schaltungsanordnung nach einem der vorangegangenen Ansprüche,
**dadurch gekennzeichnet, dass**
zwischen der Hydropumpe (6) und der Systemdruckleitung (5) ein Rückschlagventil (8) vorgesehen ist, welche ein Rückfließen von Hydraulikflüssigkeit über die Hydropumpe (6) verhindert.

8. Hydraulische Schaltungsanordnung nach einem der vorangegangenen Ansprüche,
**dadurch gekennzeichnet, dass**
ein mit der Systemdruckleitung (5) verbundenes federbelastetes Rückschlagventil (9) vorgesehen ist, welches bei Überschreiten eines vorbestimmten Systemdrucks (p_{syst,über}) ein Abfließen von Hydraulikflüssigkeit ermöglicht.

9. Hydraulische Schaltungsanordnung nach einem der vorangegangenen Ansprüche,
**dadurch gekennzeichnet, dass**
der Speicher (11) ein Membran-, Balg- oder Kolbenspeicher ist.

10. Hydraulische Schaltungsanordnung nach einem der vorangegangenen Ansprüche,
**dadurch gekennzeichnet, dass**
wenigstens einer der Aktuatoren (1, 2) mittels eines kraftveränderlichen Elektromagnetventils (3, 4) ansteuerbar ist.

11. Hydraulische Schaltungsanordnung nach einem der vorangegangenen Ansprüche,
**dadurch gekennzeichnet, dass**
die Einrichtung (20) zur Versorgung mit Hydraulikflüssigkeit mit der Systemdruckleitung (5) verbunden ist.

12. Hydraulische Schaltungsanordnung nach Anspruch 11,
**dadurch gekennzeichnet, dass**
ein mit der Systemdruckleitung (5) verbundenes federbelastetes Rückschlagventil (10) vorgesehen ist, welches bei Überschreiten eines vorbestimmten Systemdrucks (p₂) eine Versorgung der Einrichtung (20) mit Hydraulikflüssigkeit ermöglicht.

13. Hydraulische Schaltungsanordnung nach Anspruch 11 oder 12,
**dadurch gekennzeichnet, dass**
Mittel (21) vorgesehen sind, mit Hilfe der die Einrichtung (20) von der Systemdruckleitung (5) getrennt und wieder mit dieser verbunden werden kann.

14. Hydraulische Schaltungsanordnung nach Anspruch 13,
**dadurch gekennzeichnet, dass**
die Mittel ein einen hohen Durchfluss ermöglichendes Ein-/Aus-Ventil (21) umfassen.

15. Hydraulische Schaltungsanordnung nach einem der Ansprüche 1 bis 10,
**dadurch gekennzeichnet, dass**
eine weitere von einem weiteren Elektromotor (29) angetriebene Hydropumpe (31) vorgesehen ist, welche die Einrichtung (20) mit Hydraulikflüssigkeit speist.

16. Hydraulische Schaltungsanordnung nach Anspruch 15,
**dadurch gekennzeichnet, dass**
eine Hydropumpensteuereinrichtung (13) vorgesehen ist, welche die weitere Hydropumpe (31) periodisch zu- und abschalten kann, um ein vorbestimmtes mittleres Fördervolumen zu erhalten.

17. Hydraulische Schaltungsanordnung nach einem der Ansprüche 1 bis 10,
**dadurch gekennzeichnet, dass**
eine weitere von dem Elektromotor (7) angetriebene Hydropumpe (31) vorgesehen ist, welche die Einrichtung (20) mit Hydraulikflüssigkeit speist.

18. Hydraulische Schaltungsanordnung nach Anspruch 17,
**dadurch gekennzeichnet, dass** der Elektromotor (7) in beiden Drehrichtungen betreibbar ist und dass Mittel (35, 36) vorgesehen sind, welche es erlauben, dass je nach Drehrichtung des Elektromotors (7) entweder die Hydropumpe (6) oder die weitere Hydropumpe (31) angetrieben wird.

19. Hydraulische Schaltungsanordnung nach Anspruch 18,
**dadurch gekennzeichnet, dass**
die Mittel Freiläufe (35, 36) umfassen, welche an einer jeweiligen die Hydropumpen antreibenden rotierenden Welle (37, 38, 39, 40) angeordnet sind.

20. Hydraulische Schaltungsanordnung nach Anspruch 17, 18 oder 19,
**dadurch gekennzeichnet, dass**
ein mit der Systemdruckleitung (5) verbundenes federbelastetes Rückschlagventil (10) vorgesehen ist, welches bei Überschreiten eines vorbestimmten Systemdrucks (pₘₐₓ) eine Versorgung der Einrichtung (20) mit Hydraulikflüssigkeit aus der Systemdruckleitung (5) ermöglicht.

21. Verfahren zur Ansteuerung einer nasslaufenden Doppelkupplung eines automatischen Doppelkupplungsgetriebes
- mit einem ersten hydraulisch ansteuerbaren Aktuator (1) für die erste Kupplung der Doppelkupplung,
- mit einem zweiten hydraulisch ansteuerbaren Aktuator (2) für die zweite Kupplung der Doppelkupplung,
- mit einer Einrichtung (20) zur Versorgung der Doppelkupplung mit Hydraulikflüssigkeit zur Kühlung der Doppelkupplung,
- mit einer Hydropumpe (6), welche eine Systemdruckleitung (5), aus der der erste Aktuator (1) und der zweite Aktuator (2) gespeist werden, speist,
**dadurch gekennzeichnet, dass**
- die Hydropumpe (6) von einem Elektromotor (7) angetrieben wird und dass
- mittels der Hydropumpe (6) ein mit der Systemdruckleitung (5) verbundener hydraulischer Speicher (11) geladen wird.

22. Verfahren nach Anspruch 21,
**dadurch gekennzeichnet, dass**
die Hydropumpe (6) abgeschaltet wird, wenn ein hydraulischer Systemdruck (p_{syst}) in der Systemdruckleitung (5) einen vorbestimmten hydraulischen Systemdruck (p₂) übersteigt und dass die Hydropumpe (6) einschaltet wird, wenn der hydraulische Systemdruck (p_{syst}) in der Systemdruckleitung (5) einen vorbestimmten hydraulischen Systemdruck (p₁) unterschreitet.

23. Verfahren nach einem der Ansprüche 21 oder 22,
**dadurch gekennzeichnet, dass**
der Speicher (11) von der Systemdruckleitung (5) getrennt wird, wenn keiner der beiden Aktuatoren (1, 2) hydraulisch angesteuert wird.

24. Verfahren nach einem der Ansprüche 21 bis 23,
**dadurch gekennzeichnet, dass**
bei Überschreiten eines vorbestimmten Systemdrucks (p₃) in der Systemdruckleitung (5) ein Abfließen von Hydraulikflüssigkeit ermöglicht wird.

25. Verfahren nach einem der Ansprüche 21 bis 24,
**dadurch gekennzeichnet, dass**
die Einrichtung (20) mit Hydraulikflüssigkeit aus der Systemdruckleitung (5) versorgt wird.

26. Verfahren nach Anspruch 25,
**dadurch gekennzeichnet, dass**
die Einrichtung (20) erst bei Überschreiten eines vorbestimmten Systemdrucks (p₃) mit Hydraulikflüssigkeit aus der Systemdruckleitung versorgt wird.

27. Verfahren nach Anspruch 25 oder 26,
**dadurch gekennzeichnet, dass**
die Einrichtung (20) periodisch von der Systemdruckleitung (5) getrennt und wieder mit dieser verbunden wird, um ein mittleres vorbestimmtes Fördervolumen zu erhalten.

28. Verfahren nach einem der Ansprüche 21 bis 24,
**dadurch gekennzeichnet, dass**
die Einrichtung (20) mittels einer weiteren von einem weiteren Elektromotor (29) angetriebenen Hydropumpe (31) mit Hydraulikflüssigkeit gespeist wird.

29. Verfahren nach Anspruch 28,
**dadurch gekennzeichnet, dass**
die weitere Hydropumpe (31) periodisch zu- und abgeschaltet wird, um ein vorbestimmtes mittleres Fördervolumen zu erhalten.

30. Verfahren nach einem der Ansprüche 21 bis 24,
**dadurch gekennzeichnet, dass**
die Einrichtung (20) mittels einer weiteren von dem Elektromotor (7) angetriebenen Hydropumpe (31) mit Hydraulikflüssigkeit gespeist wird.

31. Verfahren nach Anspruch 30,
**dadurch gekennzeichnet, dass**
der Elektromotor (7) in beiden Drehrichtungen betrieben wird und dass je nach Drehrichtung des Elektromotors (7) entweder die Hydropumpe (6) oder die weitere Hydropumpe (31) angetrieben wird.

32. Verfahren nach Anspruch 30 oder 31,
**dadurch gekennzeichnet, dass**
bei Überschreiten eines vorbestimmten Systemdrucks (pₘₐₓ) eine Versorgung der Einrichtung (20) mit Hydraulikflüssigkeit aus der Systemdruckleitung (5) ermöglicht wird.

33. Verwendung einer Schaltungsanordnung nach einem der Ansprüche 1 bis 20 bzw. eines Verfahrens nach einem der Ansprüche 21 bis 32 zur Ansteuerung einer Doppelkupplung mit relativ geringem Hydraulikflüssigkeitsbedarf in einem automatisierten Schaltgetriebe für Hybridantrieb.
